# EUROPEAN PATENT APPLICATION

(11) **EP 1 953 419 A1**
(43) Date of publication of application: **06.08.2008**
(21) Application number: 07001941.9
(22) Date of filing: 30.01.2007
(51) Int. Cl.: F16H 3/66

(54) **Planetary transmission**

(71) Applicant: GM Global Technology Operations, Inc., Detroit, MI 48265-3000 (US)
(72) Inventor: Ensminger, Julien, 67530 Klingent (FR); Rihn, Matthieu, 67380 Lingolsheim (FR); Schreiber, Herve, 67210 Obernai (FR)
(74) Representative: Strauss, Peter

(57) **Abstract**

A transmission is provided with only two gearsets and 6 clutches. The transmission also includes a plurality of selectively engageable torque transmitting devices configured to selectively interconnect selected members of the gearsets for unitary rotation thereby to provide nine forward speed ratios and at least one reverse speed ratio between an input member and an output member.

## Description

This invention relates to a transmission.

Passenger vehicles include a powertrain that is comprised of an engine, a multi-speed transmission, and a differential or final drive. The multi-speed transmission increases the overall operating range of the vehicle by permitting the engine to operate through its torque range a number of times. The number of forward speed ratios that are available in the transmission determines the number of times the engine torque range is repeated. Early automatic transmissions had two speed ranges. This severely limited the overall speed range of the vehicle and therefore required a relatively large engine that could produce a wide speed and torque range. This resulted in the engine operating at a specific fuel consumption point other than the most efficient point during cruising. Therefore, manually-shifted (countershaft transmissions) were the most popular.

With the advent of three- and four-speed automatic transmissions, the automatic shifting (planetary gear) transmission increased in popularity with the motoring public. These transmissions improved the operating performance and fuel economy of the vehicle. The increased number of speed ratios reduces the step size between ratios and therefore improves the shift quality of the transmission by making the ratio interchanges substantially imperceptible to the operator under normal vehicle acceleration.

It has been suggested that the number of forward speed ratios be increased to six or more. Six-speed transmissions are disclosed in U.S. Patent No. 4, 070, 927 issued to Polak on January 31, 1978; and U.S. Patent No. 6, 422, 969 issued to Raghavan and Usoro on July 23, 2002.

Six-speed transmissions offer several advantages over four- and five-speed transmissions, including improved vehicle acceleration and improved fuel economy. While many trucks employ power transmissions having six or more forward speed ratios, passenger cars are still manufactured with three- and four-speed automatic transmissions and relatively few five or six-speed devices due to the size and complexity of these transmissions.

Seven-speed transmissions are disclosed in U.S. Patent No. 6,623,397 issued to Raghavan, Bucknor and Usoro. Eight speed transmissions are disclosed in U.S. Patent No. 6,425,841 issued to Haka. The Haka transmission utilizes three planetary gear sets and six torque transmitting devices, including two brakes and two clutches, to provide eight forward speed ratios and a reverse speed ratio. One of the planetary gear sets is positioned and operated to establish two fixed speed input members for the remaining two planetary gear sets. Seven-, eight- and nine-speed transmissions provide further improvements in acceleration and fuel economy over six-speed transmissions. The main interest of such transmissions is to get two so-called "overdrive" ratios after the ratio in which the maximal vehicle speed is reached. These ratios make it possible for the engine to run quite low on the freeway which reduces fuel consumption. Regarding a seven-speed transmission, an eight-speed transmission has the advantage to provide one more ratio that will improve the vehicle performance in terms of accelerations (if this ratio is added between the first gear and the gear of maximal vehicle speed).

The object of the invention is to provide an automatic transmission with at least eight forward speed ratios and one reverse speed to be realized with a minimum of complexity, size and cost.

Conforming to the invention, this is achieved by a transmission comprising:
an input member; an output member; a stationary member;
an input assembly composed of two decks and an output assembly composed of two decks; both input assembly and output assembly being either Ravigneaux gearsets or compound gearsets;
at least one sun gear member of said input assembly being continuously operatively connected to said input member for unitary rotation therewith;
at least one ring gear member of said output assembly being continuously operatively connected to said output member for unitary rotation therewith;
first, second, third, fourth, fifth, sixth torque transmitting devices being operative to selectively connect members of said input assembly and said output assembly with said stationary member or with other members of said input assembly or said output assembly to provide at least eight forward speed ratios and one reverse speed ratio.

In a preferred embodiment the input assembly is configured as Ravigneaux gearset with only one sun gear.

In an alternative preferred embodiment the input assembly is configured as Ravigneaux gearset with only one internal gear.

The object may also be achieved by a transmission comprising:
an input member; an output member; a stationary member;
an input assembly composed of two decks and an output assembly composed of two decks; the input assembly being configured as compound gearset;
at least one sun gear member of said input assembly being continuously operatively connected to said input member for unitary rotation therewith;
at least one ring gear member of said output assembly being continuously operatively connected to said output member for unitary rotation therewith;
first, second, third, fourth, fifth, sixth torque transmitting devices being operative to selectively connect members of said input assembly and said output assembly with said stationary member or with other members of said input assembly or said output assembly to provide at least eight forward speed ratios and one reverse speed ratio.

In one embodiment that said first torque transmitting device and said second torque transmitting device are configured to selectively couple internal gears of said input assembly with said first sun gear member of said output assembly.

In another embodiment of the invention said first torque transmitting device and said second torque transmitting device are configured to selectively couple sun gears of said input assembly with said input member.

In a further configuration of the invention said first torque transmitting device is configured to selectively couple said ring gear of said first deck of said input assembly with said first sun gear member of said output assembly and said second torque transmitting device is configured to selectively couple said ring gear of said second deck of said input assembly with said first sun gear member of said output assembly.

Alternatively, it is possible that said first torque transmitting device is configured to selectively couple said ring gear of said second deck of said input assembly with said first sun gear member of said output assembly and said second torque transmitting device is configured to selectively couple said ring gear of said first deck of said input assembly with said first sun gear member of said output assembly.

A still further embodiment is characterized in that said first torque transmitting device is configured to selectively couple said sun gear of said first deck of said input assembly with said input member and said second torque transmitting device is configured to selectively couple said sun gear of said second deck of said input assembly with said sun gear member of said output assembly with said input member.

Alternatively, said first torque transmitting device may be configured to selectively couple said sun gear of said second deck of said input assembly with said input member and said second torque transmitting device may be configured to selectively couple said sun gear member of said first deck of said input assembly with said input member.

It is possible that said output assembly is configured as Ravigneaux gearset.

In an alternative embodiment said output assembly is configured as compound gearset.

In this context, both ring gear members of said output assembly may be continuously operatively connected to said output member for unitary rotation therewith.

Conforming to the invention, said third torque transmitting device is configured to selectively couple said input member with said second sun gear member of said output assembly for unitary rotation therewith; wherein said fourth torque transmitting device is configured to selectively couple said input member with said planetary carrier of said output assembly for unitary rotation therewith; wherein said fifth torque transmitting device is configured to selectively couple said first sun gear member of said output assembly with said stationary member for unitary rotation therewith; and wherein said sixth torque transmitting device is configured to selectively couple said stationary member with said planet carrier member of said output assembly for unitary rotation therewith.

In a preferred embodiment of the invention the first, second, the third and the fourth torque transmitting devices are dynamic clutches and the fifth and sixth torque transmitting devices are reaction clutches.

It is also preferred that the sixth torque transmitting device is configured to be used as a friction launch and therefore to replace the torque converter.

The long pinion of said input assembly may be stepped or not.

The long pinion of said output assembly may be stepped or not.

Finally, a one way clutch may be provided.

In summary, the concept of the invention provides nine forward speeds and one reverse speed. Single upshifts and downshifts are done through a single clutch to single clutch transition. It is noteworthy that the transmission can also be used with success as an eight-speed-transmission by using only the first eight forward gears.

The above features and advantages and other features and advantages of the present invention are readily apparent from the following detailed description of the best modes for carrying out the invention when taken in connection with the accompanying drawings.
FIGURE 1 is a schematic representation of a transmission in accordance with the present invention;
FIGURE 2 is a ratio chart and truth table depicting a shift logic for use with the transmission of Figure 1, the values and steps being given for example and may vary according to the teeth counts of the gears used for the planetary gearsets, and
FIGURE 3 is a schematic representation of variations of the object of invention.

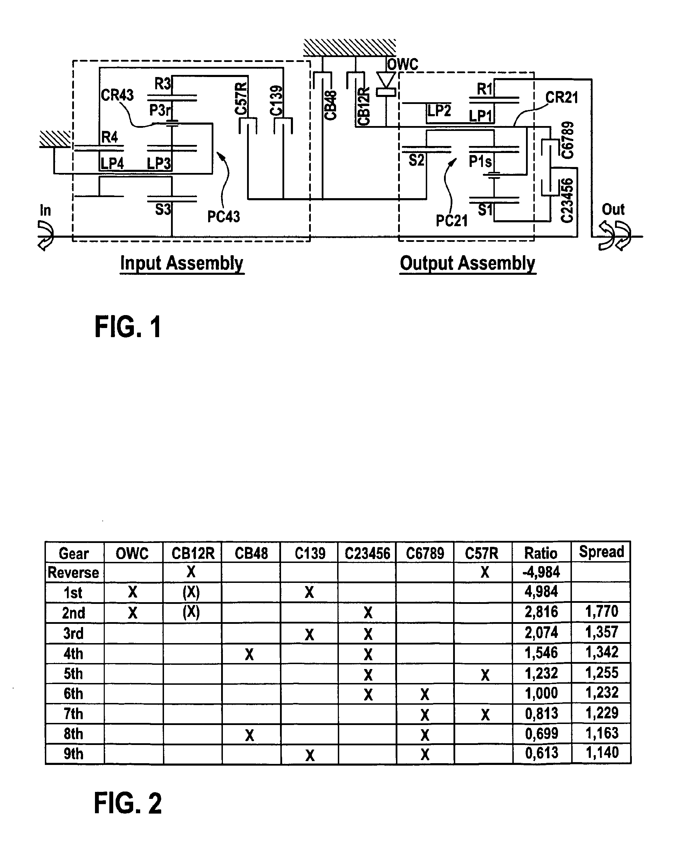

As shown in FIGURE 1a, a transmission is provided having an input member such as input shaft (In), an output member such as an output shaft (Out), and a stationary member.

Both the input assembly and the output assembly are composed of two decks. The four decks of the transmission are called deck 1, deck 2, deck 3 and deck 4, from the rear side of the transmission (output) to the front side (input). The input assembly of the transmission is composed of a first deck (deck 4) and of a second deck (deck 3) and its output assembly is also composed of a first deck (deck 2) and of a second deck (deck 1) so that

In the example of FIGURE 1, both the input assembly and the output assembly are configured as Ravigneaux gearsets (that is to say with a long pinion and with a common planet carrier) . On the first deck of the input assembly (deck 4), there is one ring gear (R4), whereas the second deck of the input assembly (deck 3) comprises of a sun gear (S3), a planet carrier assembly (PC43) wherein the planet pinion (P3r) is meshing with a ring gear (R3) of this deck. The sung gear (S3) of the second deck (deck 3) is continuously operatively connected to said input member (In) for unitary rotation therewith and the planet pinions carrier of the input assembly is constantly fixed and provides reaction.

The output assembly is also configured as a Ravigneaux gearset with a sun gear (S2) on the first deck (deck 2) of the output assembly. The second deck of the output assembly (deck 1) is composed of a sun gear (S1), a planet carrier assembly (PC21) wherein the planet pinion (P1s) is meshing with the sun gear (S1) and a ring gear (R1) which is constantly coupled to the output shaft (Out) for unitary rotation therewith.

The long pinions of the Ravigneaux gearsets can be stepped, which means that the front and rear gears of the long pinions may have different gear data (tooth count, pressure and helix angles, etc.) or not stepped.

The transmission further includes first (C139), second (C57R), third (C23456), fourth (C6789), fifth (CB48) and sixth (CB12R) torque transmitting devices that are operative to selectively connect members of the Ravigneaux gearsets with the stationary member or with other members of the Ravigneaux gearsets to provide at least eight forward speed ratios and one reverse speed ratio. There are four rotating clutches (C139, C57R, C23456 and C6789) and two braking clutches (CB12R and CB48).

The first torque transmitting device (C139) is configured to selectively couple said ring gear member (R4) of said first deck (deck 4) of said input assembly with said sun gear member (S2) of said first deck (deck 2) of said output assembly for unitary rotation therewith. The second torque transmitting device (C57R), which is a rotating clutch applied in the 5^{th}, 7^{th} and Reverse gears and released in other gears, is configured to selectively couple said ring gear member (R3) of said second deck (deck 3) of said input assembly with said sun gear member (S2) of said first deck (deck 2) of said output assembly. The third torque transmitting device (C23456) is configured to selectively couple said input member with said second sun gear member (S1) of said output assembly for unitary rotation therewith. The fourth torque transmitting device (C6789) is configured to selectively couple said input member with said planetary carrier (CR21) of said output assembly for unitary rotation therewith. The fifth torque transmitting device (CB48), which is a braking clutch applied in 4^{th} and 8^{th} gears, and released in other gears, is configured to selectively couple said first sun gear member (S2) of said output assembly with said stationary member for unitary rotation therewith. The sixth torque transmitting device (CB12R) is configured to selectively couple said stationary member with said planet carrier member (CR21) of said output assembly for unitary rotation therewith.

A one way clutch (OWC) or freewheel can be used to provide reaction in first and second gears, in drive condition, which allows to reduce the capacity of the fourth torque transmitting device (CB12R). In this case, the fourth torque transmitting device (CB12R) would be used in the first and second gears to provide only engine braking. The use of the one way clutch (OWC) is optional.

An electronic control unit (not shown) is preferably employed to control the engagement of the torque transmitting devices via hydraulic actuation in a manner understood by those skilled in the art.

Referring to FIGURE 2, a shift logic sequence for the clutches is depicted that provides nine forward speed ratios and one reverse speed ratio between the input member and the output member. Referring to Figures 1 and 2, a first forward speed ratio is achieved when clutches CB12R and C139 (and, if present, OWC) are engaged. A second forward speed ratio is achieved when clutches CB12R and C23456 (and, if present, OWC) are engaged. A third forward speed ratio is achieved when clutches C139 and C23456 are engaged. A fourth forward speed ratio is achieved when clutches CB48 and C23456 are engaged. A fifth forward speed ratio is achieved when clutches C23456 and C57R are engaged. A sixth forward speed ratio is achieved when clutches C23456 and C6789 are engaged. A seventh forward speed ratio is achieved when clutches C57Rand C6789 are engaged. An eighth forward speed ratio is achieved when clutches CB48 and C6789 are engaged. A ninth forward speed ratio is achieved when clutches C139 and C6789 are engaged. A reverse speed ratio is achieved when clutches CB12R and C57R are engaged.

It should be noted, as apparent from Figure 2, that the transmission is characterized by single step speed ratio interchanges between adjacent forward speed ratios being accomplished by single transition shifting.

The total spread with the transmission used as a eight speed transmission is 7,13 and 8,13 if the transmission is used as a nine speed transmission.

Be it known that the gear ratios can be differently optimized for any particular requirement by modifying the tooth count.

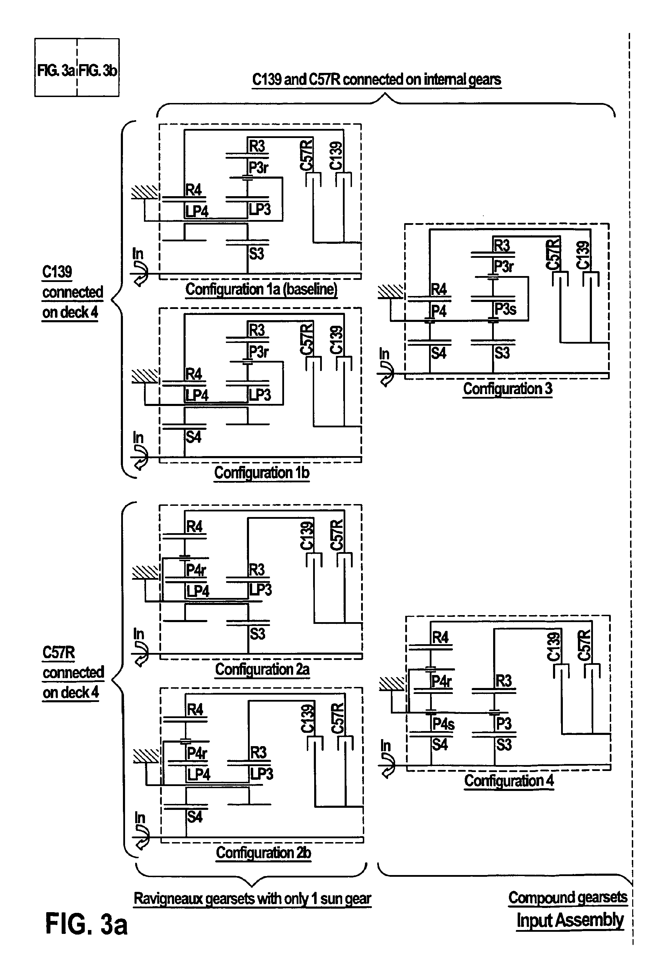

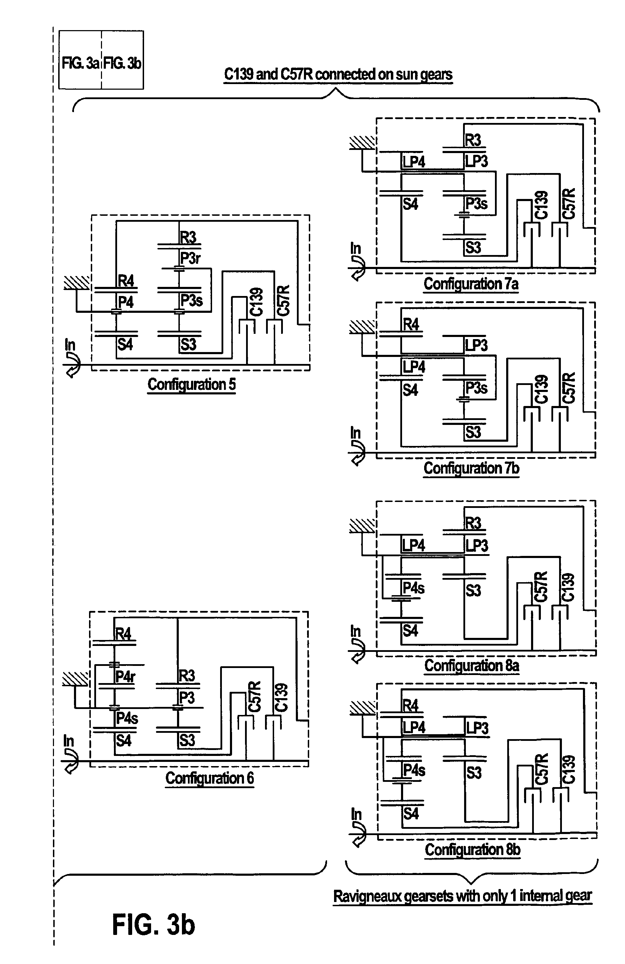

As shown in FIGURE 3, many alternative arrangements can be made by modifying the configurations of the input and output assemblies.

Concerning the input assembly, it may be configured as Ravigneaux gearsets with only one sun gear (configurations 1a, 1b, 2a, 2b), as compound gearsets (configurations 3, 4, 5, 6) or as Ravigneaux gearsets with only one internal gear (configurations 7a, 7b, 8a, 8b).

Furthermore, either C139 can be connected on deck 4 (configurations 1a, 1b, 3, 5, 7a, 7b) or C57R can be connected to deck 4 (configurations 2a, 2b, 4, 6, 8a, 8b).

A further possible variation is that C139 and C57R are either connected on ring gears (configurations 1a, 1b, 2a, 2b, 3, 4) or on sun gears (configurations 5, 6, 7a, 7b, 8a, 8b).

These variations allow the twelve configurations of the input assembly shown in FIGURE 3.

The output assembly can be configured as Ravigneaux gearsets with the ring gear (R1) of the second deck (deck 1) of the output assembly coupled to the output shaft (Out) or with the ring gear (R2) of the first deck (deck 2) of the output assembly coupled to the output shaft (Out).

It also can be configured as compound gearsets explaining thereby the three configurations of the output assembly shown in FIGURE 3.

The variations of the input assembly can be freely combined with the variations of the output assembly thereby allowing a multitude of possible combinations.

## Claims

1. A transmission comprising:
an input member; an output member; a stationary member;
an input assembly composed of a first deck (deck 4) and of a second deck (deck 3) and an output assembly composed of a first deck (deck 2) and of a second deck (deck 1) ; the input assembly being configured as Ravigneaux gearset;
at least one sun gear member (S3, S4) of said input assembly being continuously operatively connected to said input member for unitary rotation therewith;
at least one ring gear member (R1, R2) of said output assembly being continuously operatively connected to said output member for unitary rotation therewith;
first, second, third, fourth, fifth, sixth torque transmitting devices being operative to selectively connect members of said input assembly and said output assembly with said stationary member or with other members of said input assembly or said output assembly to provide at least eight forward speed ratios and one reverse speed ratio.

2. The transmission of claim 1, wherein the input assembly is configured as Ravigneaux gearset with only one sun gear.

3. The transmission of claim 1, wherein the input assembly is configured as Ravigneaux gearset with only one internal gear.

4. A transmission comprising:
an input member; an output member; a stationary member;
an input assembly composed of two decks and an output assembly composed of two decks; the input assembly being configured as compound gearset;
at least one sun gear member (S3, S4) of said input assembly being continuously operatively connected to said input member for unitary rotation therewith;
at least one ring gear member (R1, R2) of said output assembly being continuously operatively connected to said output member for unitary rotation therewith;
first, second, third, fourth, fifth, sixth torque transmitting devices being operative to selectively connect members of said input assembly and said output assembly with said stationary member or with other members of said input assembly or said output assembly to provide at least eight forward speed ratios and one reverse speed ratio.

5. The transmission of claims 1, 2 or 4, wherein said first torque transmitting device (C139) and said second torque transmitting device (C57R) are configured to selectively couple internal gears of said input assembly with said sun gear member (S2) of said output assembly.

6. The transmission of claims 1, 3 or 4, wherein said first torque transmitting device (C139) and said second torque transmitting device (C57R) are configured to selectively couple sun gears of said input assembly with said input member.

7. The transmission of claims 1, 2, 4 or 5, wherein said first torque transmitting device (C139) is configured to selectively couple said ring gear (R4) of said first deck (deck 4) of said input assembly with said sun gear member (S2) of said output assembly and said second torque transmitting device (C57R) is configured to selectively couple said ring gear (R3) of said second deck (deck 3) of said input assembly with said sun gear member (S2) of said output assembly.

8. The transmission of claims 1, 2 and 4 to 6, wherein said first torque transmitting device (C139) is configured to selectively couple said ring gear (R3) of said second deck (deck 3) of said input assembly with said sun gear member (S2) of said output assembly and said second torque transmitting device (C57R) is configured to selectively couple said ring gear (R4) of said first deck (deck 4) of said input assembly with said sun gear member (S2) of said output assembly.

9. The transmission of claims 1, 3, 4 or 6, wherein said first torque transmitting device (C139) is configured to selectively couple said sun gear (S4) of said first deck (deck 4) of said input assembly with said input member and said second torque transmitting device (C57R) is configured to selectively couple said sun gear (S3) of said second deck (deck 3) of said input..assembly with said input member.

10. The transmission of claims 1, 3, 4 or 6, wherein said first torque transmitting device (C139) is configured to selectively couple said sun gear (S3) of said second deck (deck 3) of said input assembly with said input member and said second torque transmitting device (C57R) is configured to selectively couple said sun gear (S4) of said first deck (deck 4) of said input assembly with said input member.

11. The transmission of claims 1 to 10, wherein said output assembly is configured as Ravigneaux gearset.

12. The transmission of claim 11, wherein both ring gear members (R1, R2) of said output assembly are continuously operatively connected to said output member for unitary rotation therewith.

13. The transmission of claim 11, wherein said output assembly is configured as compound gearset.

14. The transmission of one of claims 1 to 13, wherein said third torque transmitting device (C23456) is configured to selectively couple said input member with said second sun gear member (S1) of said output assembly for unitary rotation therewith; wherein said fourth torque transmitting device (C6789) is configured to selectively couple said input member with said planetary carrier (CR21) of said output assembly for unitary rotation therewith; wherein said fifth torque transmitting device (CB48) is configured to selectively couple said first sun gear member (S2) of said output assembly with said stationary member for unitary rotation therewith; and wherein said sixth torque transmitting device (CB12R) is configured to selectively couple said stationary member with said planet carrier member (CR21) of said output assembly for unitary rotation therewith.

15. The transmission of one of claims 1 to 14, wherein the first, second, the third and the fourth torque transmitting devices (C139, C57R, C23456 and C6789) are dynamic clutches and the fifth and sixth torque transmitting devices (CB48 and CB12R) are reaction clutches.

16. The transmission of claim 15, wherein the sixth torque transmitting device (CB12R) is configured to be used as a friction launch and therefore to replace the torque converter.

17. The transmission of one of claims 1 to 15, wherein the sixth torque transmitting device (CB12R) is configured to be used as a friction launch and therefore to replace the torque converter.

18. The transmission of one of claims 1 to 3, wherein the long pinion (LP4, LP3) of said input assembly is stepped.

19. The transmission of one of claims 1 to 3, wherein the long pinion (LP4, LP3) of said input assembly is not stepped.

20. The transmission of claim 11, wherein the long pinion (LP2, LP1) of said output assembly is stepped.

21. The transmission of claim 11, wherein the long pinion (LP2, LP1) of said output assembly is not stepped.

22. The transmission of claims 1 to 21, wherein a one way clutch (OWC) is provided.
